# EUROPEAN PATENT SPECIFICATION

(11) **EP 1 912 363 B1**
(45) Date of publication and mention of the grant of the patent: **02.01.2013**
(21) Application number: 05772890.9
(22) Date of filing: 26.07.2005
(51) Int. Cl.: H04W 88/10, H04W 4/10

(54) **A METHOD FOR ENCAPSULATING AND DECAPSULATING THE GROUP SIGNALING IN THE CDMA BASED GROUP SYSTEM**
VERFAHREN ZUM VERKAPSELN UND ENTKAPSELN DER GRUPPENSIGNALISIERUNG IN DEM AUF CDMA BASIERENDEN GRUPPENSYSTEM
PROCÉDÉ PERMETTANT D ENCAPSULER ET DÉCAPSULER LE SIGNAL GROUPÉ DANS LE SYSTÈME DE GROUPE BASÉ SUR LE CDMA

(43) Date of publication of application: 16.04.2008
(73) Proprietor: ZTE Corporation, Guangdong 518057 (CN)
(72) Inventor: HUANG, Chi, ZTE Plaza, Keji Road South, 518057 Shenzhen City, Guangdong Province (CN); ZHAN, Bei, ZTE Plaza, Keji Road South, 518057 Shenzhen City, Guangdong Province (CN); DING, Mengjiao, ZTE Plaza, Keji Road South, 518057 Shenzhen City, Guangdong Province (CN); LIU, Jinlong, ZTE Plaza, Keji Road South, 518057 Shenzhen City, Guangdong Province (CN)
(74) Representative: Gervasi, Gemma
(86) International application number: PCT/CN2005/001117
(87) International publication number: WO 2007/012220

(56) References cited:
- EP-A1- 1 523 207
- WO-A1-02/093953
- WO-A1-02/093953
- WO-A1-02/093954
- WO-A2-2004/017525
- US-A1- 2005 078 627
- US-B1- 6 728 365
- 3RD GENERATION PARTNERSHIP PROJECT 2 "3GPP 2": "Upper Layer (Layer 3) Signaling Standard for cdma2000 Spread Spectrum Systems" 3GPP2-DRAFTS, 2500 WILSON BOULEVARD, SUITE 300, ARLINGTON, VIRGINIA 22201 USA, 4 February 2004 (2004-02-04), XP002537192
- Anonymous: "Administration of Parameter Value Assignments for cdma2000(R) Spread Spectrum Standards;(Revision of TSB-58-E);TSB-58-F", 1 December 2003 (2003-12-01), Telecommunications Industry Association, XP017004325,

## Description

### Technical Field

The present invention pertains to a realization method of encapsulation of the trunked signaling in the trunking system and the decapsulation in the air interface. More specifically, it relates to the CDMA (Code Division Multiple Access) technology based method of dedicated signaling encapsulation in the digital trunking field and the decapsulation in the air interface.

### Background Art

Trunking communication is a major branch of wireless communication and it is mainly applied in professional mobile communication field. The greatest feature of trunking communication is that voice communication uses the PTT (Push To Talk) keys and is connected by way of "once punched, then getting connected". The called party can communicate without hook-off and the connection speed is relatively fast and it also supports functions such as trunking calling, etc.. With a high expectation of the trunking communication market, those digital trunking communication systems developed by communication manufactures have started entering into this field and the related standards are also introduced one after another, with which it suddenly shows a "cluster" developing trend for the national trunking communication standards.

The document WO 02/093953 A1 discloses a method and apparatus for reducing latency in a group communication network, which provides for a significant reduction in the actual total dormancy wakeup time and the PTT latency by exchanging group call signaling even when mobiles are dormant and no traffic channel is active. The method and apparatus provides for exchanging the group call signaling through the use of the short data burst (SDB) message signaling.

Based on CDMA technology, the trunking communication system combines the CDMA technology with the dedicated dispatch communication system. By using the half-duplex communication method, it could realize fast connection and also supports trunking calling, that is, one-to-many calling manner. Therefore, it not only expands the service scope of cellular communication system but also helps the trunking communication system in getting rid of the functional and regional limitations of dedicated dispatch communication system. For example, the document WO 2004/017525 A2 discloses methods and systems for implementing trunking techniques in CDMA system for handling group calls and push-to-talk services, also using SDB message signaling.

CDMA trunking system network consists of the trunked terminal, the base station system/ dispatch client (terminal) and the dispatch server, wherein the base station system/dispatch client (terminal) gets connected with the dispatch server through A10d/A11d interface and gets connected with trunked terminal through air interface.

As a professional trunking system, it needs to realize functions such as cluster group-calling, fast-accessing and large capacity, etc.. In order to realize these functions and properties, the base station system and the terminal, the dispatch server and the terminal have to exchange large quantity of information that are named as private trunked signaling. These signaling are mainly used for professional trunking functions such as talking permission application, emergent calling and status checking etc. However, there is no definition for the referred information in the standard protocol of CDMA.

Besides the mentioned use of SDB message signalling for the purpose of transmitting trunked signaling, such standards provide in document "Administration of Parameter Value Assignments for cdma2000(R) Spread Spectrum Standards;(Revision of TSB-58-E);TSB-58-F" section 4, Data Burst message type assignments providing alternatives to the Short Data Bursts service.

CDMA scheme based trunking system is a trunking system that is developed on the basis of CDMA technology. As a result, it must obey the CDMA air interface standard protocol in order to realize the compatibility with cellular CDMA system and also has a smooth transition to 3G network.

Therefore, it becomes a pending problem to complete the interaction of the private trunked signaling between the terminals and the networking equipments on the air interface without changing the CDMA standard protocol.

### Summary of the Invention

The technical problem that needs to be solved in present invention is to provide a method of encapsulating and decapsulating the trunked signaling in the CDMA based trunking system. Without adding and revising any parts of IS2000 standard protocol, it can realize the interaction of the trunking system messages between the trunked terminal and the trunked networking equipments such as base station system and the dispatch server, and the like.

In order to solve the technical problems mentioned above, the present invention provides the following solution:

A method for encapsulating the trunked signaling in the CDMA based trunking system as defined in claim 1.

A method for decapsulating the trucked signaling in the CDMA based flunking system as defined in claim 5.

A method for encapsulating and decapsulating the trunked signaling in the CDMA based trunking system comprises two parts of encapsulation and decapsulation;
wherein the encapsulation part comprises the following steps:
step 1, above the link layer, the trunked signaling uses the data burst message as carrier and when transmitting those trunked signaling, the burst type of data burst message is filled in with short data burst type or private trunking burst type, moreover, data burst layer encapsulation is utilized for the trunked signaling.
Step 2: above the data burst layer, short data burst layer encapsulation or trunking message layer encapsulation is utilized for the trunked signaling.

The decapsulation part comprises the following steps:
Step 10: the base station system or the trunked terminal receives the data burst message;
Step 20: the data burst type of the data burst message is determined. If it belongs to short data burst type, then step (30) is executed, or if it belongs to the dedicated trunking burst type, then step (40) is executed;
Step 30: the service option field in the short data burst message header is determined. If it is the trunking service option, then step (40) is executed;
Step 40: message type, length are taken from the data burst message header, and also message text is processed.

Compared with existing technology, the present invention has the following advantages:

The method described in the present invention utilizes the encapsulation and decapsulation of the trunked message in the CDMA based system, and efficiently realizes the interaction of the trunking system messages between the trunked terminal and the base station system as well as the dispatch server without adding and revising any parts of IS2000 standard protocol. It not only conforms to the CDMA air interface standard protocol but also realizes the compatibility with cellular CDMA system and has a smooth transition to 3G network.

The technical problem to be solved, the key points of the technical scheme and the beneficial results of the invention will be described further in combination with the exemplifying embodiments and attached figures.

### Brief Description of the Attached Figures

Figure 1 is a flowchart of a method for encapsulating the trunked signaling in the CDMA scheme based trunking system described in the present invention;
Figure 2 is a structure diagram for encapsulating trucked signaling among trunked mobile terminals, base station system/dispatch client and dispatch server in CDMA scheme based trunking system described in the present invention;
Fig3 is a format diagram for encapsulating trunked signaling between trunked terminals and base station system in CDMA scheme based trunking communication system described in the present invention;
Figure 4 is a flowchart for decapsulating trunked signaling in CDMA scheme based trunking system as described in the present invention;
Figure 5 is a flowchart for decapsulating trunked signaling in CDMA scheme based trunking system as described in the present invention according to an exemplifying embodiment;

### Preferred Embodiments of the Invention

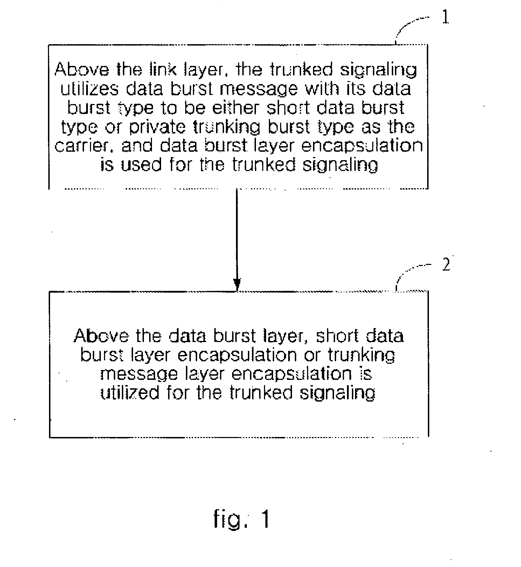

As is shown in figure 1, it is a flowchart of the method for encapsulating the trunked signaling in CDMA based system.

First of all, above the link layer, the trunked signaling uses the data burst message as carrier and when transmitting those trunked signaling, the burst type of data burst message is filled in with short data burst type or dedicated trunking burst type, moreover, data burst layer encapsulation is utilized for the trunked signaling (step1); then, above the data burst layer, short data burst layer encapsulation or trunking message layer encapsulation is utilized for the trunked signaling (step 2).

There is no special requirement for the burst type of data burst message to be filled in with short data burst type or dedicated trunking burst type, since it can be realized with existing technology. If the data burst type is short data burst type, then the trunked signaling utilizes short data burst encapsulation above the data burst layer; namely, encapsulation is performed utilizing short data burst message header. The message header includes the service option field which indicates that the current transmitted item is trunked signaling, and thereafter, it employs the trunking message layer encapsulation above the short data burst layer. Right here, the trunking message layer processes encapsulation for the type, length and text of the trunking message.

If the data burst type is dedicated trunking burst type, the trunked signaling directly utilizes the trunking message layer encapsulation above the data burst layer. In the same way, the trunking message layer also processes encapsulation for the type, length and text of the trunking message.

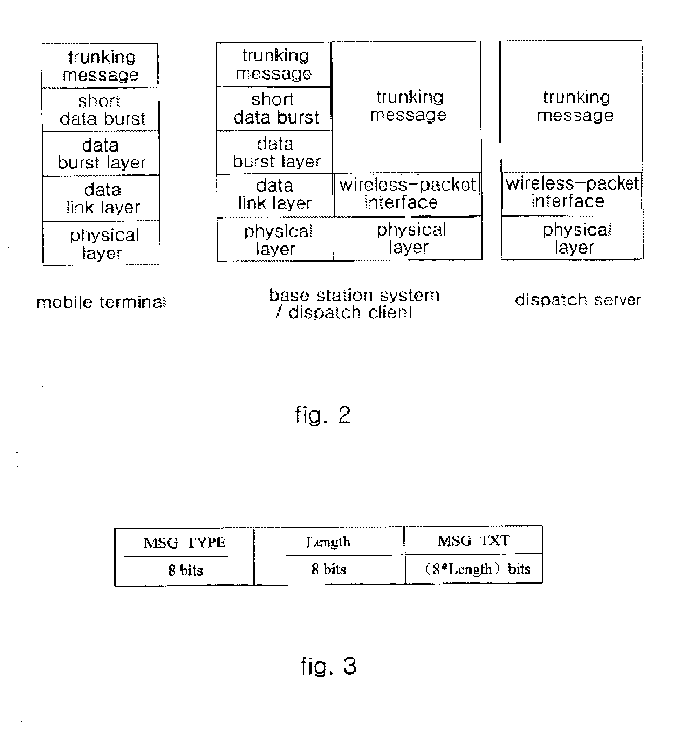

As is shown in figure 2, it is a structure diagram for encapsulating trucked signaling among trunked mobile terminals, base station system/dispatch client and dispatch server in CDMA scheme based trunking system as described in the present invention;

Here, the trunked signaling link is divided into physical layer, link layer, data burst layer, short data burst layer (SDB) and trunking message layer.

The bottom layer of trunked signaling air interface is defined in the same way as in the CDMA IS2000 protocol, which is grouped into physical layer (PHY) and link layer (RL for short hereafter). The physical layer is mainly responsible for modulation and demodulation while the link layer performs the function of link routing.

Above the data link layer is the data burst layer which is mainly used to carry trunked signaling and short message. When used to transmit trunked signaling, the burst type of data burst message is either SDB burst type or dedicated trunking burst type.

If the data burst type is SDB, then right above the data burst layer is the SDB layer in which the service option field is included. When the data burst layer is used to transmit trunked signaling, the service option in the message header is dedicated trunking service option, above the SDB layer is the trunking message layer. If the data burst type is dedicated trunking service option, then above the data burst layer is directly the trunking message layer.

As the most top layer, the trunking message layer can either be directly above the data burst layer or the SDB layer (It depends on the data burst type of the data burst message) and it encapsulates the trunking message by way of the message header format of message type, length and text.

As it is shown in figure 2, between the base station system/dispatch client and the dispatch server is the trunked signaling interface which has the physical layer as the bottom layer. Above the physical layer is the RP protocol layer. The trunking message is directly encapsulated above the RP link, and the base station system can realize the inter-conversion and processing of the message format between the two interfaces.

Figure 3 describes the encapsulation format of the trunked signaling between the trunked terminal and the base station system. The encapsulation format also includes options: service option and the identifier DATABLOCK (not shown in figure 3).

SDB layer uses SDB message header for encapsulation. The message header includes the fields such as service option and DATABLOCK. The trunked signaling utilizes the trunking service option to identify that the trunked signaling is currently under transmission, now what encapsulated in the identifier DATABLOCK is the trunking message, indicating that it needs to process the trunked signaling according to the format of the trunked message header.

The message of the trunking message protocol layer uses a format of type (MSG_TYPE), length, and value (MSG_TXT) to encapsulate the trunked signaling. The type identifies the trunked signaling type, the length identifies the trunked signaling length and the value identifies the trunked signaling content.

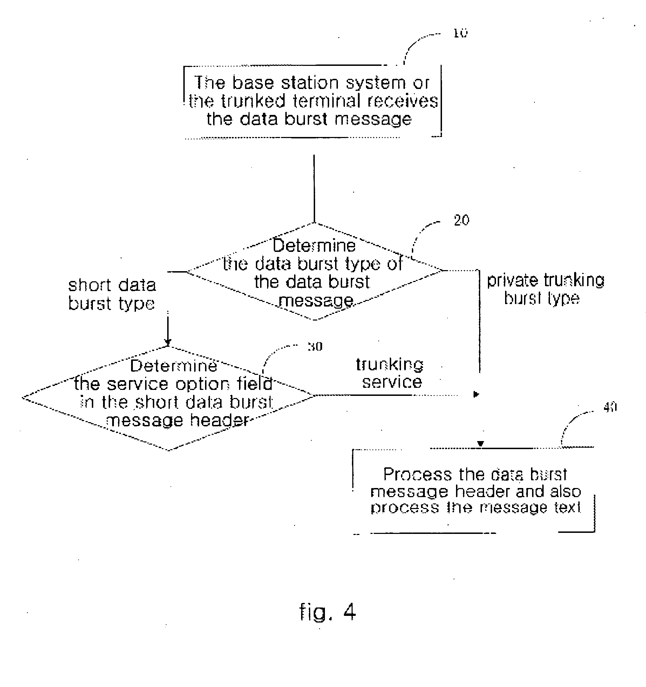

As is shown in figure 4, it is a flowchart of the method for decapsulating trunked signaling in CDMA based system.

First of all, the base station or the trunked terminal receives the data burst message (step 10);

Then the data burst type of the data burst message is decided. If it belongs to short data burst type, then step30 is executed; if it belongs to the dedicated trunking burst type, then step 40 is executed (step 20); here, if the data burst type in said trunking message is short data message, then short data message processing flow is executed;

The service option field in the short data burst message header is decided. If it is the trunking service option, then step 40 is executed (step 30); meantime if the service option in the service option field in said message header is the packet data service option, the data burst message will be forwarded to the packet data handling module for processing and after its content has been taken apart, it will be directly encapsulated through the general routing protocol and finally be sent to network equipment;

The message type and message length are picked out from the data burst message header and the message text is processed (step 40).

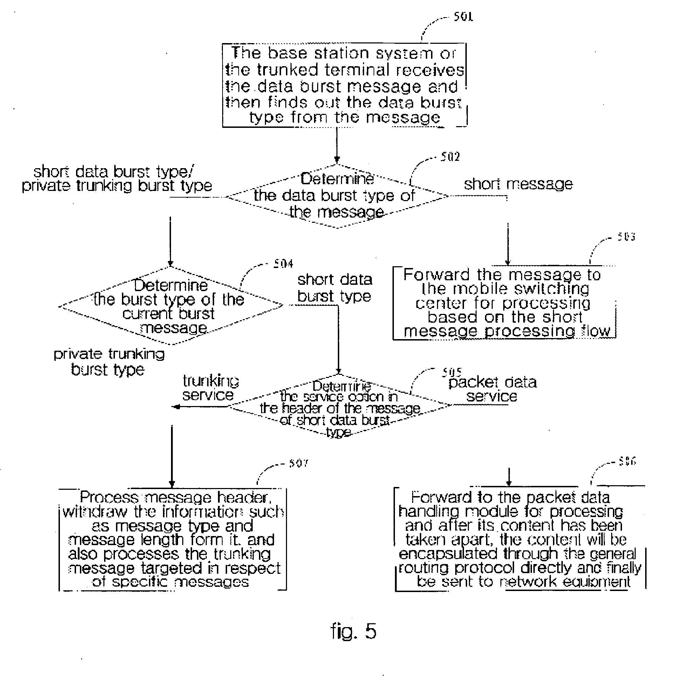

As is shown in figure 5, it is a flowchart of the embodiment of the method for decapsulating trunked signaling in CDMA based system.

First of all, after the base station system or the trunked terminal receives the data burst message, the data burst message is processed according to the definition in IS2000 protocol and the data burst type is figured out from the message (step 501).

Then the data burst type of the message is judged. If the burst type is short data burst type or if the burst type is private trunking burst type, then step 504 is executed to process, otherwise, it is the short message and step 503 is executed (step 502).

Finally, the message is forwarded to the mobile switching center for processing on basis of short message process flow, ending (step 503).

Whether the burst type of current burst message is private trunking burst type or not is determined. If yes, step 507 is executed, otherwise, it is to process for SDB burst type and the step 505 is executed (step 504).

Afterwards, the service option in the SDB message header is judged. If the service option is the trunking service option, indicating that this is a piece of trunked signaling, then step 507 is executed, or if the service option is packet data service option, then step 506 is executed (step 505).

The SDB is forwarded to the packet data handling module for processing and after its content has been taken apart, it will be encapsulated through the general routing protocol directly and finally be sent to network equipment, ending (step 506).

The information such as message type and message length are pick out from the data burst message header and the trunking message is processed in respect of specific information in order to realize the function of the trunking system, ending (step 507).

Additionally, the encapsulation and decapsulation processes described in the invention could be used independently as independent encapsulation and decapsulation processes. Meanwhile, they can also be used in combination as a whole transmitting process.

### Industrial Applicability

Without adding and revising any parts of IS2000 standard protocol, the method described in the present invention efficiently realizes the interaction of the trunking system messages between the trunked terminal and the trunking network equipments such as the base station system and the dispatch server. It not only conforms to the CDMA air interface standard protocol but also realizes the compatibility with cellular CDMA system and a smooth transition to 3G network.

## Claims

1. A method for encapsulating trunked signaling in a CDMA based system, **characterized by** comprising the following steps:
(1): above a link layer, trunked signaling uses a data burst message as carrier and when transmitting the trunked signaling, burst type of the data burst message is filled in with dedicated trunking burst type, and moreover, data burst layer encapsulation is utilized for the trunked signaling;
(2): when the data burst type is dedicated trunking burst type, the trunked signaling directly utilizes the trunking message layer encapsulation above the data burst layer;
wherein the data burst layer is used to carry trunked signaling and short message, the short data burst layer includes a service option field, and the trunking message layer processes encapsulation for type, length and text of the trunking message.

2. The method for encapsulating trunked signaling of claim 1, wherein said short data burst layer uses a short data burst message header for encapsulation.

3. The method for encapsulating trunked signaling of claim 2, wherein said message header comprises the service option field.

4. The method for encapsulating trunked signaling of claim 3, wherein said service option field indicates what is being transmitted currently is the trunked signaling.

5. A method for decapsulating the trunked signaling in a CDMA based system, **characterized in** comprising the following steps:
(10) a base station system or a trunked terminal receives a data burst message;
(20) data burst type of the data burst message is decided; if it belongs to short data burst type, then step (30) is executed; if it belongs to the dedicated trunking burst type, then step (40) is executed;
(30) the service option field in the short data burst message header is decided; if it is a trunking service option, then step (40) is executed;
(40) message type, length are taken out from the data burst message header and message text thereof is processed.

6. The method for decapsulating trunked signaling of claim 5, wherein in said step (20), if the data burst type in said data burst message is short data message, then short data message processing flow is executed.

7. The method for decapsulating trunked signaling of claim 5, wherein in said step (30), if the service option in the service option field of said message header is a packet data service option, then the data burst message will be forwarded to a packet data handling module for processing and after its content has been taken apart, it will be directly encapsulated through a general routing protocol and finally be sent to a network equipment.

## Patentansprüche

1. Verfahren zum Kapseln der Bündelsignalisierung in einem CDMA-basierten System, **dadurch gekennzeichnet, dass** das Verfahren die folgenden Schritte umfasst:
(1) Oberhalb einer Sicherungsschicht verwendet die Bündelsignalisierung eine Daten-Burst-Nachricht als Träger, wobei beim Senden der Bündelsignalisierung ein Burst-Typ der Daten-Burst-Nachricht mit dem dedizierten Bündel-Burst-Typ ausgefüllt wird und darüber hinaus eine Daten-Burst-Schicht-Kapselung für die Bündelsignalisierung genutzt wird;
(2) wenn der Daten-Burst-Typ der dedizierte Bündel-Burst-Typ ist, nutzt die Bündelsignalisierung die Bündelnachrichtenschicht-Kapselung über der Daten-Burst-Schicht direkt;
wobei die Daten-Burst-Schicht zum Ausführen einer Bündelsignalisierung und Kurznachricht verwendet wird, wobei die Kurzdaten-Burst-Schicht ein Dienstoptionsfeld enthält und wobei die Bündelnachrichtenschicht die Kapselung für den Typ, für die Länge und für den Text der Bündelnachricht verarbeitet.

2. Verfahren zum Kapseln der Bündelsignalisierung gemäß Anspruch 1, bei dem die genannte Kurzdaten-Burst-Schicht zur Kapselung einen Kurzdaten-Burst-Nachrichtenanfangsblock verwendet.

3. Verfahren zum Kapseln der Bündelsignalisierung gemäß Anspruch 2, bei dem der genannte Nachrichtenanfangsblock das Dienstoptionsfeld umfasst.

4. Verfahren zum Kapseln der Bündelsignalisierung gemäß Anspruch 3, bei dem das genannte Dienstoptionsfeld angibt, dass das, was gegenwärtig übertragen wird, die Bündelsignalisierung ist.

5. Verfahren zum Entkapseln der Bündelsignalisierung in einem CDMA-basierten System, **dadurch gekennzeichnet, dass** das Verfahren die folgenden Schritte umfasst:
(10) Ein Basisstationssystem oder ein Bündelendgerät empfängt eine Daten-Burst-Nachricht;
(20) der Daten-Burst-Typ der Daten-Burst-Nachricht wird entschieden; falls er zum Kurzdaten-Burst-Typ gehört, wird der Schritt (30) ausgeführt; falls er zu dem dedizierten Bündel-Burst-Typ gehört, wird der Schritt (40) ausgeführt;
(30) das Dienstoptionsfeld in dem Kurzdaten-Burst-Nachrichtenanfangsblock wird entschieden; falls es eine Bündeldienstoption ist, wird der Schritt (40) ausgeführt;
(40) aus dem Daten-Burst-Nachrichtenanfangsblock werden der Nachrichtentyp, die Länge entnommen und der Nachrichtentext davon wird verarbeitet.

6. Verfahren zum Entkapseln der Bündelsignalisierung gemäß Anspruch 5, bei dem in dem genannten Schritt (20) der Kurzdatennachrichten-Verarbeitungsablauf ausgeführt wird, falls der Daten-Burst-Typ in der genannten Daten-Burst-Nachricht die Kurzdatennachricht ist.

7. Verfahren zum Entkapseln der Bündelsignalisierung gemäß Anspruch 5, bei dem die Daten-Burst-Nachricht in dem genannten Schritt (30) an ein Paketdatenbehandlungsmodul zur Verarbeitung weitergeleitet wird und, nachdem ihr Inhalt zerlegt worden ist, durch ein allgemeines Routing-Protokoll direkt gekapselt wird und schließlich an eine Netzausrüstung gesendet wird, falls die Dienstoption in dem Dienstoptionsfeld des genannten Nachrichtenanfangsblocks eine Paketdatendienstoption ist.

## Revendications

1. Procédé d'encapsulation de signalisation à ressources partagées dans un système à base d'AMRC (accès multiple par répartition en code), **caractérisé en ce qu'**il comprend les étapes suivantes :
(1) : au-dessus d'une couche de liaison, la signalisation à ressources partagées utilise un message de rafale de données en tant que porteuse et lors de la transmission de la signalisation à ressources partagées, un type de rafale du message de rafale de données est rempli par un type de rafale de partage dédié, et de plus, l'encapsulation de couche de rafale de données est utilisée pour la signalisation à ressources partagées ;
(2) : lorsque le type de rafale de données est le type de rafale de partage dédié, la signalisation à ressources partagées utilise directement l'encapsulation de couche de message de partage au-dessus de la couche de rafale de données ;
dans lequel la couche de rafale de données est utilisée pour porter une signalisation à ressources partagées et un message court, la couche de rafale de données courtes comprend un champ d'option de service, et la couche de message de partage traite l'encapsulation pour le type, la longueur et le texte du message de partage.

2. Procédé d'encapsulation de signalisation à ressources partagées selon la revendication 1, dans lequel ladite couche de rafale de données courtes utilise un en-tête de message de rafale de données courtes pour l'encapsulation.

3. Procédé d'encapsulation de signalisation à ressources partagées selon la revendication 2, dans lequel ledit en-tête de message comprend le champ d'option de service.

4. Procédé d'encapsulation de signalisation à ressources partagées selon la revendication 3, dans lequel ledit champ d'option de service indique que ce qui est actuellement transmis est la signalisation à ressources partagées.

5. Procédé de désencapsulation de signalisation à ressources partagées dans un système à base d'AMRC, **caractérisé en ce qu'**il comprend les étapes suivantes :
(10) un système de station de base ou un terminal à ressources partagées reçoit un message de rafale de données ;
(20) un type de rafale de données du message de rafale de données est adopté ; s'il appartient au type de rafale de données courtes, alors l'étape (30) est exécutée ; s'il appartient au type de rafale de partage dédié, alors l'étape (40) est exécutée ;
(30) le champ d'option de service dans l'en-tête de message de rafale de données est adopté ; s'il s'agit d'une option de service de partage, alors l'étape (40) est exécutée ;
(40) le type, la longueur de message sont retirés de l'en-tête de message de rafale de données et le texte de message de ce dernier est traité.

6. Procédé de désencapsulation de signalisation à ressources partagées selon la revendication 5, dans laquelle dans ladite étape (20), si le type de rafale de données dans ledit message de rafale de données est un message de données courtes, alors le flux de traitement de message de données courtes est exécuté.

7. Procédé de désencapsulation de signalisation à ressources partagées selon la revendication 5, dans lequel dans ladite étape (30), si l'option de service dans le champ d'option de service dudit en-tête de message est une option de service de données de paquet, alors le message de rafale de données sera acheminé vers un module de manipulation de données de paquet pour traitement et après que son contenu a été séparé, il sera directement encapsulé via un protocole de routage général et sera finalement envoyé à un équipement de réseau.
